# EUROPEAN PATENT APPLICATION

(11) **EP 4 190 465 A1**
(43) Date of publication of application: **07.06.2023**
(21) Application number: 22209085.4
(22) Date of filing: 23.11.2022
(51) Int. Cl.: B22F 10/14, B22F 10/37, B22F 10/85, B22F 12/90, B28B 1/00, B29C 64/165, B29C 64/393, B33Y 10/00, B33Y 30/00, B33Y 50/02, G06N 20/00, G06T 7/00, H04N 13/239

(54) **FABRICATION APPARATUS, FABRICATION SYSTEM, AND FABRICATION METHOD**

(30) Priority: 01.12.2021 JP 2021195329; 16.03.2022 JP 2022041375
(71) Applicant: Ricoh Company, Ltd., Tokyo 143-8555 (JP)
(72) Inventor: YOROZU, Yasuaki, Tokyo, 143-8555 (JP)
(74) Representative: SSM Sandmair

(57) **Abstract**

A fabrication apparatus (10) includes a forming device (23; 24; 25; 26), an application device (22), an acquisition device (28), and circuitry (29). The forming device (23; 24; 25; 26) forms a layer containing powder (20). The application device (22) applies a fabrication liquid (21) to the layer formed by the forming device (23; 24; 25; 26). The acquisition device (28) acquires surface information of a surface of the layer. The circuitry (29) controls at least one of the forming device (23; 24; 25; 26) and the application device (22) to change at least one of an operation of the forming device (23; 24; 25; 26) and an operation of the application device (22) based on the surface information acquired by the acquisition device (28).

## Description

### BACKGROUND

### Technical Field

Embodiments of the present disclosure relate to a fabrication apparatus to fabricate a three-dimensional object, a fabrication system, and a fabrication.

### Related Art

Methods of fabricating a three-dimensional object, such as a selective laser sintering (SLS) method in which a laser beam is selectively emitted, an electron beam melting (EBM) method in which an electron beam is emitted, a binder jetting (BJ) method in which a fabrication liquid is applied, and the like, are known in the art.

For example, in a fabrication apparatus that fabricates a three-dimensional object by the BJ method, when repeating a series of operations of forming a powder layer and applying a liquid based on shape data of a three-dimensional model, the fabrication apparatus controls a subsequent series of operations to be performed in response to a dry state of a region of the powder layer to which the liquid is applied (e.g., Japanese Unexamined Patent Application Publication No. 2020-142420).

However, in such a fabrication apparatus, since the subsequent series of operations is controlled only based on the dry state of the liquid, the shape and strength of the three-dimensional object may vary, causing the quality of the three-dimensional object to deteriorate.

### SUMMARY

To solve the above-described situation, the present disclosure has an object to provide a fabrication apparatus, a fabrication system, and a method of controlling fabrication of a three-dimensional object to improve the quality of the three-dimensional object.

Embodiments of the present disclosure describe an improved fabrication apparatus (or system) that includes a forming device, an application device, an acquisition device, and circuitry. The forming device forms a layer containing powder. The application device applies a fabrication liquid to the layer formed by the forming device. The acquisition device acquires surface information of a surface of the layer. The circuitry controls at least one of the forming device and the application device to change at least one of an operation of the forming device and an operation of the application device based on the surface information acquired by the acquisition device.

According to other embodiments of the present disclosure, there are provided a fabrication method that includes forming a layer containing powder, applying a fabrication liquid onto the layer formed by the forming to fabricate a three-dimensional object, acquiring surface information of a surface of the layer, and controlling at least one of the forming and the applying to change an operation of at least one of the forming and the applying based on the surface information acquired by the acquiring.

As a result, according to the present disclosure, the quality of a three-dimensional object can be improved.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic view of a fabrication system according to an embodiment of the present disclosure;
FIG. 2 is a schematic diagram illustrating a BJ method;
FIG. 3 is a schematic view of a fabrication apparatus according to an embodiment of the present disclosure;
FIG. 4 is a block diagram illustrating an example of a functional configuration of a control circuit according to an embodiment of the present disclosure;
FIG. 5 is an illustration of an example of surface information of a powder layer according to an embodiment of the present disclosure;
FIG. 6 is an illustration of an example of a captured image in which the powder layer has unevenness, cracks, and an aggregate;
FIGS. 7A and 7B are illustrations of the surface information when a moving speed is changed as an operation of forming the powder layer;
FIG. 8 is a schematic diagram illustrating examples of operations when a device for forming the powder layer is changed;
FIG. 9 is a schematic diagram of particles in the powder layer, illustrating a cause that affects the quality of sintering by controlling the operation of applying a fabrication liquid;
FIG. 10 is an illustration of an example of a sintered body in which sintering does not sufficiently proceed;
FIGS. 11A and 11B are illustrations of a powder surface of the powder layer for explaining a method of detecting a permeation range of the fabrication liquid;
FIGS. 12A and 12B are illustrations for explaining a method of detecting the height difference of the powder surface;
FIGS. 13A and 13B are schematic diagrams of the powder layer in a fabrication chamber, to which the fabrication liquid is applied;
FIG. 14 is an illustration of an example of an image in which shadows due to warpage is captured;
FIG. 15 is a schematic diagram of the particles for explaining a method of estimating a density from a height difference of the powder surface;
FIG. 16 is a schematic diagram of the fabrication apparatus to facilitate detection of abnormality of the powder surface by a powder surface sensor;
FIG. 17 is an illustration of an example of a captured image;
FIGS. 18A and 18B are illustrations of the surface information after the powder layer is formed and the surface information after the fabrication liquid is applied;
FIG. 19 is a flowchart of controlling an operation of the fabrication apparatus according to an embodiment of the present disclosure;
FIG. 20 is a flowchart of calibration before fabrication according to an embodiment of the present disclosure;
FIG. 21 is a flowchart of measurement of particle diameter distribution of powder according to an embodiment of the present disclosure;
FIG. 22 is a flowchart of recoating optimization according to an embodiment of the present disclosure;
FIG. 23 is a flowchart of concentration calibration of the fabrication liquid according to an embodiment of the present disclosure;
FIG. 24 is a flowchart of recoating adjustment according to an embodiment of the present disclosure;
FIG. 25 is a flowchart of powder layer analysis according to an embodiment of the present disclosure;
FIG. 26 is a flowchart of concentration adjustment of the fabrication liquid according to an embodiment of the present disclosure;
FIG. 27 is a flowchart of fabrication layer analysis according to an embodiment of the present disclosure; and
FIG. 28 is a block diagram of a fabrication system according to another embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Although the present disclosure is described below with reference to some embodiments, embodiments of the present disclosure are not limited to the embodiments described below.

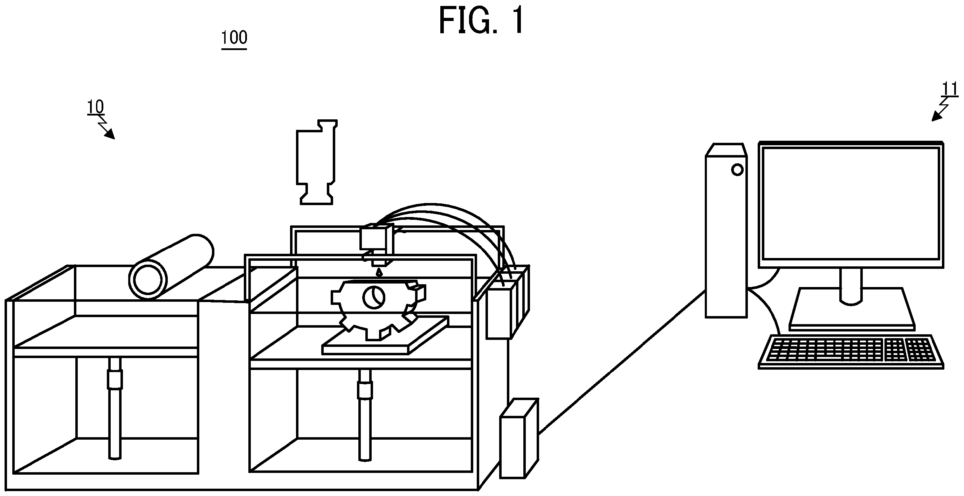

FIG. 1 is a schematic view of a fabrication system to fabricate a three-dimensional object. In the present disclosure, the three-dimensional object is a three dimensionally fabricated object (finished product) fabricated by the fabrication system, and when simply referred to as a fabricated object, the fabricated object means an aggregation of a plurality of fabrication layers during fabrication by the fabrication system. One layer in which powder is merely spread is referred to as a powder layer. The powder layer to which a fabrication liquid is applied is referred to as a fabrication layer, in which the powder is bonded by the fabrication liquid to form a desired shape. When simply referred to as a layer, the layer means the powder layer, the fabrication layer, or both.

A fabrication system 100 includes a fabrication apparatus 10 that fabricates a three-dimensional object. The fabrication system 100 may include only the fabrication apparatus 10, but may further include an information processing apparatus 11 that communicates with the fabrication apparatus 10 and transmits shape data of a three-dimensional object to be fabricated to the fabrication apparatus 10. When the fabrication system 100 includes only the fabrication apparatus 10, the functions of the information processing apparatus 11 can be incorporated in the fabrication apparatus 10.

The information processing apparatus 11 is a personal computer (PC), a tablet terminal, a smartphone, or the like. The information processing apparatus 11 implements an application for creating shape data of a three-dimensional object, and transmits the shape data created by the application to the fabrication apparatus 10. The information processing apparatus 11 may store shape data created by another device without implementing the application, read the stored shape data in response to an instruction from a user, and transmit the shape data to the fabrication apparatus 10. The fabrication apparatus 10 and the information processing apparatus 11 may be connected by a cable, or may be wirelessly connected. The fabrication apparatus 10 and the information processing apparatus 11 may be connected via a network. The shape data is created for fabricating each layer into which a three-dimensional object to be fabricated is divided by a lamination pitch.

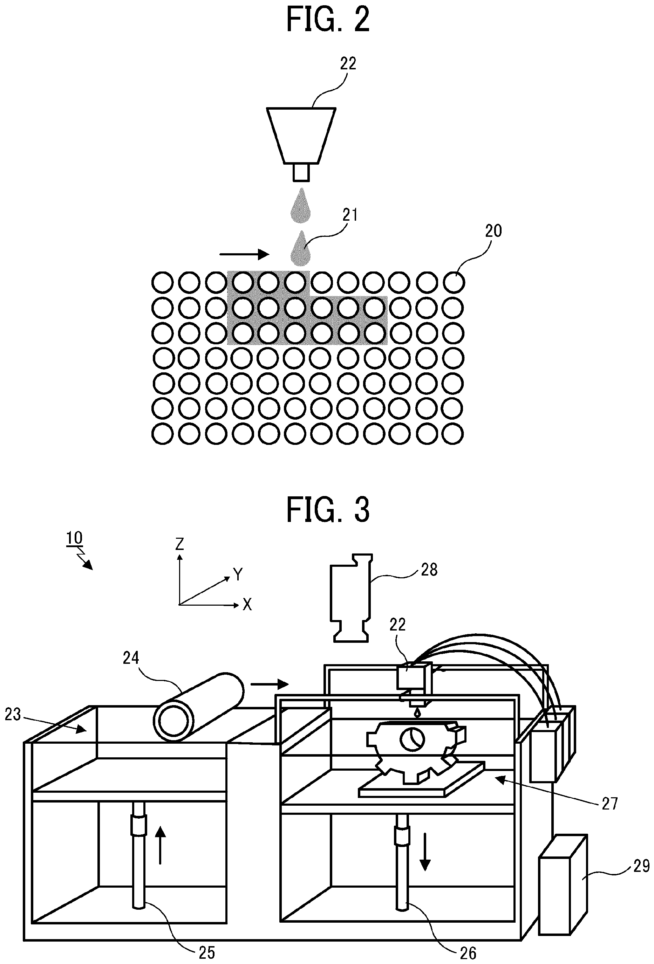

The fabrication apparatus 10 employs the BJ method, for example. As illustrated in FIG. 2, the fabrication apparatus 10 spreads powder 20 to a predetermined thickness corresponding to the lamination pitch to form a powder layer. Then, the fabrication apparatus 10 causes an inkjet print head 22 as an application device to discharge a fabrication liquid 21 to apply the fabrication liquid 21 to the powder 20 based on the shape data received from the information processing apparatus 11, thereby bonding and solidifying the powder 20 to form a fabrication layer. The fabrication apparatus 10 repeats the formation of the powder layer and the application of the fabrication liquid 21 to form a green body as a fabricated object in which particles of the powder 20 are bonded to each other in a layer by the fabrication liquid 21. The green body formed by the fabrication apparatus 10 is degreased to remove an excessive component of the fabrication liquid 21, and sintered to bond the particles of the powder 20 to each other, thereby obtaining a desired three-dimensional fabricated obj ect.

Powdered metal, ceramic, gypsum, or the like can be used as the powder 20. Examples of the metal includes maraging steel, stainless steel, INCONEL, cobalt chromium, an aluminum alloy, and a titanium alloy. The fabrication liquid contains an adhesive that bonds particles of the powder 20 to each other. Examples of the adhesive includes a phenol resin, a furan resin, cement, and water glass.

The fabrication apparatus 10 is described with reference to FIG. 3. The fabrication apparatus 10 includes a powder head 23, a leveling roller 24, a powder feed piston 25, and a build piston 26 as a forming device to form a powder layer; the inkjet print head 22 as the application device; a powder surface sensor 28 as an acquisition device; and a control circuit 29 as circuitry.

The forming device forms a layer containing powder. The application device applies a fabrication liquid to the layer. As an example, the fabrication apparatus 10 that operates the forming device and the application device in this order is described. Some of the devices in the fabrication apparatus 10 may be included in an apparatus other than the fabrication apparatus 10 to construct a fabrication system.

The powder head 23 includes an open-topped chamber to be filled with powder.
The leveling roller 24 moves in a predetermined direction while rotating to convey powder corresponding to one layer to an adjacent fabrication chamber 27 serving as a fabrication region, and smooths and flattens the surface of the powder to form a powder layer. The powder feed piston 25 functions as a first elevating device that vertically moves a bottom plate at the bottom of the powder head 23. The build piston 26 functions as a second elevating device that vertically moves a bottom plate at the bottom of the fabrication chamber 27. The powder feed piston 25 is raised by one lamination pitch, and the build piston 26 is lowered by one lamination pitch when the powder head 23 is filled with powder. Thereafter, the leveling roller 24 moves from left to right in FIG. 3 while rotating to form a powder layer. Although the leveling roller 24 has been described as an example of a flattening device, various rollers, plates, and the like other than the leveling roller 24 may be applied to the flattening device.

After one powder layer is formed, the inkjet print head 22 moves over the surface (powder surface) of the powder layer and discharges the fabrication liquid only to a desired region on the powder surface. The inkjet print head 22 is connected to an ink tank filled with the fabrication liquid by a tube, and is bridged between two shafts extending in a horizontal direction, for example, an X direction with respect to a surface of a table on which the fabrication apparatus 10 is installed. The two shafts are movable in a Y direction. Thus, inkjet print head 22 reciprocally moves in the X direction while sliding along the two shafts in the X direction and moves in the Y direction as the two shafts moves in the Y direction. The region to which the fabrication liquid is discharged is determined based on the shape data received from the information processing apparatus 11. Thus, the fabrication liquid is selectively applied onto the powder surface to solidify only a desired region, thereby forming a fabrication layer. Note that, when the fabrication apparatus 10 applies the fabrication liquid to powder in the desired region, the powder is temporarily solidified.

The fabrication apparatus 10 includes a heating device such as an infrared lamp, a heater, or the like to heat the desired region to which the fabrication liquid is applied to dry the region or enhance bonding of the powder to firmly solidify the powder. The fabrication apparatus 10 repeats the formation of the powder layer and the application of the fabrication liquid to fabricate a fabricated object having a desired three-dimensional shape, in which a plurality of fabrication layers is laminated.

The fabrication apparatus employing the BJ method may fabricate a green body having uneven density due to variations in properties caused by a difference in a composition of powder and variations in the forming device or the application device. Accordingly, the green body may not be partially sintered, may have insufficient strength, or a precipitate may be formed on the surface of the green body. In order to solve these situations, a uniform and dense green body is required. As a result of intensive studies by the inventor, it has been found that the uniform and dense green body can be fabricated by controlling at least one of the forming device and the application device to change at least one of an operation of the forming device and an operation of the application device based on surface information acquired by the acquisition device. Thus, the quality of the three-dimensional object can be improved without being affected by differences in the properties of the powder and variations in the forming device or the application device.

Accordingly, the fabrication apparatus 10 includes the powder surface sensor 28 as the acquisition device that acquires surface information of a surface of the layer. The powder surface sensor 28 is, for example, a camera that captures an image of the powder surface. The powder surface sensor 28 faces the powder surface at a position away from the powder surface to capture an image of the powder surface to acquire surface information. The surface information of the layer may include surface information of the powder layer, surface information of the fabrication layer, or surface information of both of the powder layer and the fabrication layer. The fabricated object is fabricated on a fabrication table installed at the bottom of the fabrication chamber 27, not on the entire powder surface of the powder spread in the fabrication chamber 27. Accordingly, the powder surface sensor 28 can capture an image of the powder surface of the fabrication region on the fabrication table and may not capture an image of the entire powder surface.

In another embodiment, the powder surface sensor 28 such as a camera that captures an image of the powder surface is attached to (disposed in contact with) the inkjet print head 22 so as to move together with the inkjet print head 22. In this case, since the powder surface sensor 28 captures the image in the vicinity of the powder surface, the powder surface sensor 28 can capture a magnified image of the detail of the powder surface. Further, since the powder surface sensor 28 moves together with the inkjet print head 22, the powder surface sensor 28 can select various positions to capture an image of the powder surface. On the other hand, the powder surface sensor 28 does not capture the entire powder surface.

In yet another embodiment, a sensor (e.g., a light-section type three-dimensional scanner) that emits a laser beam to acquire depth information from a bright line position, a sensor that emits infrared rays to acquire a change in reflection light, or the like may be applied to the powder surface sensor 28 as the acquisition device.

The acquisition device may acquire surface information of the surface of the layer containing powder to which the fabrication liquid is applied after the application device applies the fabrication liquid, may acquire surface information of the surface of the layer containing powder before the application device applies the fabrication liquid, or may acquire surface information in combination thereof. Acquiring a surface state of the layer before the application device applies the fabrication liquid, the acquisition device can acquire the filling state of the powder by recoating. Thus, the fabrication apparatus 10 can adjust a supply amount of powder, a moving speed of a recoater (e.g., the leveling roller 24), and a rotation speed of the recoater as parameters for recoating. The acquisition device that acquires the surface state of the layer to which the fabrication liquid is applied may be the same as the powder surface sensor 28 that acquires the surface information of the fabrication layer, or another device may be used as the acquisition device.

The fabrication apparatus 10 includes the control circuit 29 as the circuitry that controls operations of the leveling roller 24, the powder feed piston 25, the build piston 26, and the inkjet print head 22 based on the surface information acquired by the powder surface sensor 28. In the present embodiment, the fabrication apparatus 10 includes the control circuit 29, but the information processing apparatus 11 may include the functions of the control circuit 29 as the circuitry.

The circuitry analyzes an image as the surface information acquired by the acquisition device to control at least one of the forming device, the application device, and the heating device. The circuitry extracts a feature amount by texture analysis as analysis of the image. The circuitry determines a packing density of the powder and the excess or deficiency of the fabrication liquid based on the feature amount. Alternatively, the circuitry analyzes the difference in luminance of the image to determine the area or the like, thereby determining the dispersion of the powder, the size of the shade of the fabrication liquid, or the like. The circuitry changes the speed of the forming device, the concentration of the application device, the supply amount of the powder, and the heating time of the heating device based on the analysis of the image. The circuitry may change each of conditions of the above devices alone or may change multiple conditions in combination.

The control based on the surface information may be performed on the next layer and is not necessarily performed on all the layers depending on the surface information. That is, the circuitry determines the necessity of control based on the surface information, and the control may not be performed on the next layer, if not desired. Further, the surface information of the n-th layer may be used for the control of the (n+1)-th layer. Alternatively, the surface information of from the first layer to the (n-1)-th layer before the n-th layer may be accumulated and reflected in the control of the (n+1)-th layer. All the surface information of from the first layer to the (n-1)-th layer before the n-th layer may be reflected in the control of the (n+1)-th layer. Alternatively, surface information similar to that of the n-th layer is detected from the surface information of from the first layer to the (n-1)-th layer, and the same control as the control performed on the layer having the approximate surface information may be reflected in the (n+1)-th layer. The control may be determined in consideration of not only the approximate surface information but also fabrication data.

The control circuit 29 as the circuitry includes a storage device, a central processing unit (CPU), a random access memory (RAM), and an input-and-output interface (I/F). The storage device stores a program for controlling operations of the leveling roller 24 and so on. The CPU executes the program loaded in the RAM The input-and-output I/F controls input of surface information from the powder surface sensor 28 and output of control information to the leveling roller 24 and so on.

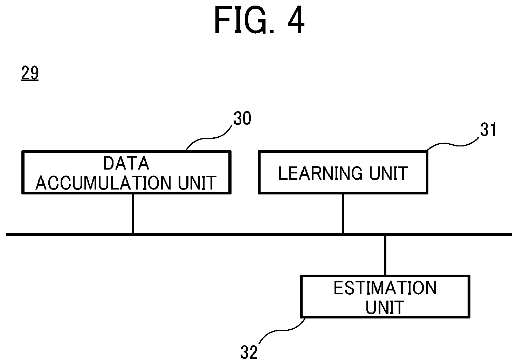

The control circuit 29 may implement a machine learning program. The control circuit 29 learns a relation between the fabrication data, the surface information, and the suitable control of the fabrication apparatus in advance to execute the suitable fabrication control on the similar fabrication data. As illustrated in FIG. 4, the machine learning program can cause the control circuit 29 to function as a data accumulation unit 30, a learning unit 31, and an estimation unit 32. The data accumulation unit 30 receives and stores the fabrication data, the surface information, and the operation information of the fabrication apparatus 10 as data. The learning unit 31 extracts the feature amount of each of the fabrication data, the surface information, and the operation information of the fabrication apparatus 10 from the data stored in the data accumulation unit 30 and learns the relation therebetween. The estimation unit 32 estimates the surface state and the suitable operation of the fabrication apparatus 10 from the certain input fabrication data based on the result of learning by the learning unit 31, and the control circuit 29 as the circuitry controls the operation of the fabrication apparatus 10 based on the estimate.

Control by the control circuit 29 is described below. The control circuit 29 controls the operation of the leveling roller 24 and so on based on the surface information acquired by the powder surface sensor 28. What kind of control is performed in response to a certain kind of surface information is described in detail below.

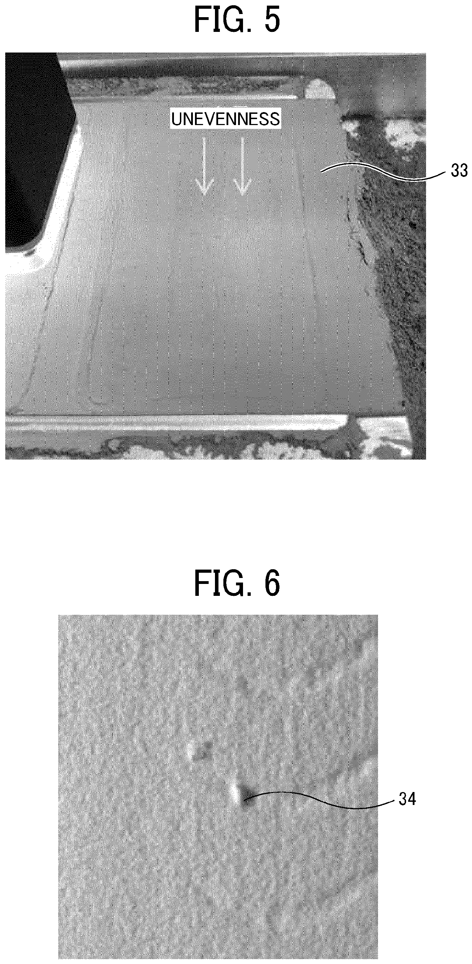

FIG. 5 is an illustration of an example of surface information acquired by the powder surface sensor 28. FIG. 5 illustrates that there is an abnormality in the powder surface. Unevenness of a powder surface 33 is illustrated as an example of the abnormality in FIG. 5, which occurs during lamination of layers. The unevenness occurs, for example, when a thick portion and a thin portion of the layer appear on the powder surface 33 in a mixed manner. Examples of the abnormality include cracks and the like in addition to the unevenness. Such an abnormality can be detected by capturing an image of the powder surface 33 from above by a camera serving as the powder surface sensor 28 and analyzing the captured image.

When there is no abnormality on the powder surface 33, a pixel value of each pixel constituting the captured image is a substantially constant value. When there is an abnormality on the powder surface 33, the image has shading in the color, and an abnormal portion has a pixel value different from that of a normal portion by a certain amount or more. In the present embodiment, a certain range is defined for the pixel value, and the control circuit 29 determines whether each pixel value is within the certain range to detect an abnormality. When there is an abnormality, the control circuit 29 detects a location of the abnormality. This method is an example, and the presence or absence of an abnormality and the location of the abnormality may be detected by other methods.

A powder layer is formed of powder supplied from the powder head 23, and an image of the powder surface 33 of the powder layer is captured. When an abnormality such as unevenness or a crack is detected on the powder surface 33, even if additional powder layers are sequentially formed on the powder surface 33, the unevenness or the crack is not eliminated. When the unevenness or the crack remains on the powder surface 33, the shape of the fabricated three-dimensional object may change or the strength of the three-dimensional object may be low. As a result, the three-dimensional object may be likely to be broken. Therefore, in the present embodiment, the control circuit 29 causes the forming device such as the powder head 23 to stop an operation of forming a powder layer. With such control, waste of the powder and the fabrication liquid can be reduced.

As illustrated in FIG. 6, when the unevenness, the crack, and an aggregate 34 are small, the abnormalities hardly affect the shape and strength of the three-dimensional object. However, if small abnormalities are accumulated, the strength of the entire fabricated object may be insufficient. For this reason, even a small abnormality that can be detected is recorded and can be utilized as data for guaranteeing the quality of the fabricated object. In the present embodiment, the control circuit 29 can perform control so as to stop the operation of the devices for forming the powder layer when the magnitude of the unevenness or the crack is beyond a certain level. The magnitude of the unevenness or the crack can be determined based on the area of the unevenness, the width of the crack, the length of the crack, and the like. An image of each layer is captured to detect an abnormality such as the unevenness or the crack, thereby dealing quickly with the abnormality.

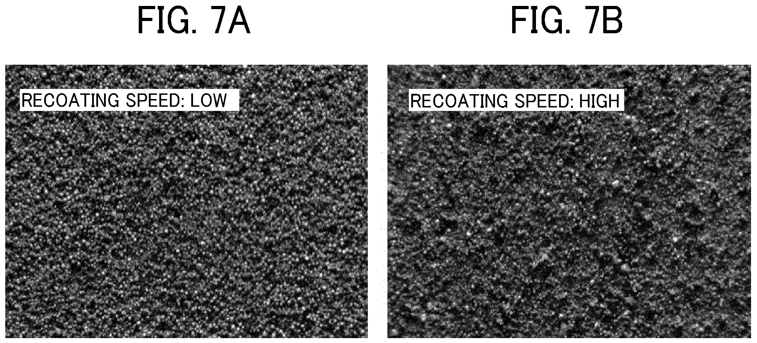

FIGS. 7A and 7B are illustration of an example of surface information when a moving speed of the leveling roller 24 is changed as an operation of forming a powder layer. One of the operations of forming the powder layer is to move the leveling roller 24. When the moving speed of the leveling roller 24 is changed, the packing density of the powder is changed. Therefore, the circuitry may control at least one of the forming device and the application device to change at least one of the operation of the forming device and the operation of the application device based on the packing density of the powder acquired from the surface information. FIG. 7A illustrates an image obtained by photographing the powder surface as the surface information when the moving speed of the leveling roller 24 is low, and FIG. 7B illustrates an image obtained by photographing the powder surface as the surface information when the moving speed of the leveling roller 24 is high. The moving speed of the leveling roller 24 is also referred to as the recoating speed.

When the moving speed is low, the particles of the powder are uniformly arranged as illustrated in FIG. 7A. On the other hand, when the moving speed is high, the particles of the powder are irregularly arranged as illustrated in FIG. 7B. If powder can be spread at a high speed, the fabrication amount per unit time can be increased, thereby enhancing productivity of the powder layer. However, when the powder is moved at the high speed, particles of the powder are likely to aggregate, and it is difficult to disperse and distribute the powder uniformly.

In addition to the moving speed of the leveling roller 24, the state of the powder in the powder layer also changes depending on the rotation speed of the leveling roller 24. When the rotation speed is high, the force for kicking up the powder is strong and the force for pressing the powder is weak, so that the packing density of the powder becomes low. On the other hand, when the rotation speed is low, the force for kicking up the powder is weak and the force for pressing the powder is strong, so that the packing density of the powder becomes high. When the packing density of the powder is high, the fabricated object after aggregation has high density and high strength, which is generally desirable. However, too strong pressing force may cause uneven powder surface, and the density of the powder layer varies depending on the location. On the other hand, when the rotation speed is increased to increase the force for kicking up the powder, the powder is packed uniformly. It is desirable that an appropriate rotation speed is set in consideration of density and uniformity of the powder layer.

The moving speed and rotation speed at which the powder can be uniformly laminated depends on whether the powder is, for example, a new material or a recycled material, and also depends on the composition and properties of the powder. Examples of the property of the powder include a particle size or a shape of the powder.

The circuitry may change an amount of the powder supplied by the forming device. Alternatively, the circuitry may change at least one of the rotation speed and the moving speed of the leveling roller 24 as the change of the operation of the forming device. For example, as illustrated in FIGS. 7A and 7B, the circuitry determines the uniformity of the arrangement of the particles on the powder surface based on an image captured by a camera to determine whether the powder is uniformly layered. If non-uniformity is found by this determination, the circuitry adjusts at least one of the rotation speed and the moving speed of the leveling roller 24. Alternatively, the circuitry adjusts the supply amount of the powder. As a result, powder can be layered uniformly. The control circuit 29 can change the rotation speed or the moving speed of the leveling roller 24 when the powder surface is uneven due to variations in the properties of the material of the powder, which is caused by the rotation speed or the moving speed of the leveling roller 24 that is too high or too low at a set value. When the powder surface is uneven due to the small supply amount of the powder, the control circuit 29 can increase the supply amount of the powder by, for example, raising the bottom plate of the powder head 23 with the powder feed piston 25. Thus, surface information is acquired, and the moving speed and the rotation speed of the leveling roller 24 is adjusted before fabrication and every several tens of layers during fabrication. The control circuit 29 may change all or some of the supply amount of the powder, the rotation speed of the leveling roller 24, and the moving speed of the leveling roller 24.

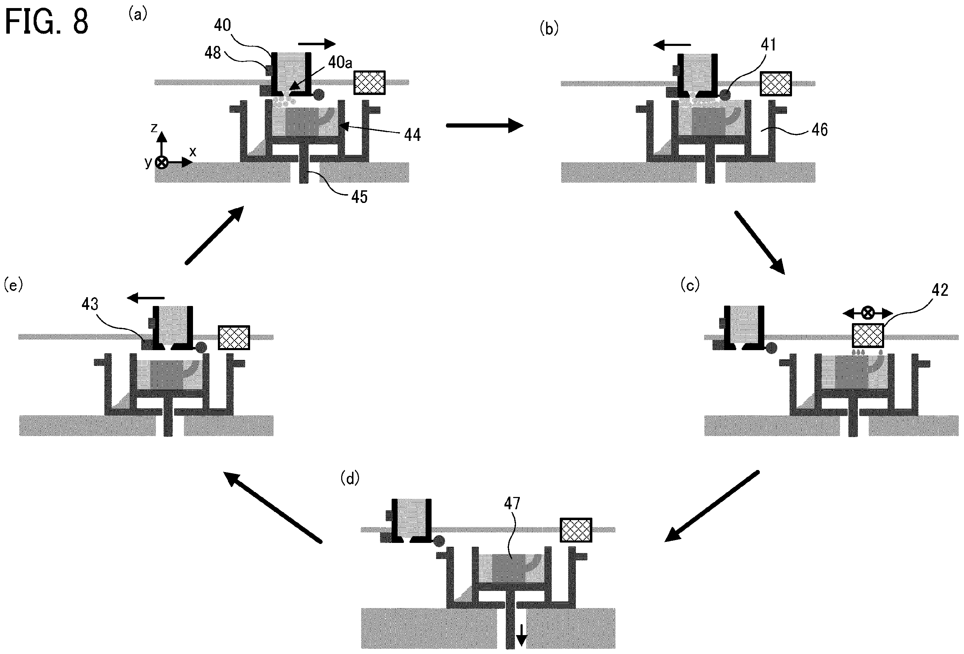

As illustrated in FIG. 3, the forming device includes the powder feed piston 25, the build piston 26, and the leveling roller 24 to form a powder layer. The powder feed piston 25 and the build piston 26 move so as to make a height difference between the bottom plates, and the leveling roller 24 flattens the powder while conveying the powder corresponding to the height difference to the fabrication chamber 27 to form the powder layer. The forming device is not limited to such a configuration, and may include a supply device that supplies powder and a vibrator 48 that applies vibration to the supply device. FIG. 8 illustrates a hopper supplier 40 as the supply device. The hopper supplier 40 drops (supplies) powder into a fabrication chamber 44, and a roller 41 smooths and flattens the surface of the powder to form a powder layer. The vibrator 48 attached to the hopper supplier 40 applies vibration to the hopper supplier 40 so as to drop a predetermined amount of the powder downward. The hopper supplier 40 also serves as a container to contain powder to be supplied to the fabrication chamber 44. The configuration illustrated in FIG. 8 is called a hopper system.

With reference to FIG. 8, the fabrication operation of the fabricated object when the device for forming the powder layer employs the hopper system is described. In the hopper system, the forming device of the fabrication apparatus 10 includes the hopper supplier 40 as the supply device and the roller 41 as the flattening device. The fabrication apparatus 10 further includes a print head 42 as the application device and an infrared lamp 43 as the heating device. The roller 41 is disposed, for example, at a lower end of the hopper supplier 40 and on a downstream side from a supply port 40a in the X direction. The supply port 40a is disposed in a lower portion of the hopper supplier 40 and is openable and closable. The roller 41 levels the powder dropped from the supply port 40a. The infrared lamp 43 is disposed, for example, on an upstream side from the supply port 40a in the X direction. The hopper supplier 40 and the print head 42 are slidably mounted on a shaft extending in the X direction, and the shaft is movable in the Y direction. Thus, the hopper supplier 40 and the print head 42 reciprocally move in the X direction while sliding along the shaft in the X direction and moves in the Y direction as the shaft moves in the Y direction. In the present embodiment, the shaft extends in the X direction, but the present disclosure is not limited thereto, and the shaft may extend in the Y direction and may be movable in the X direction.

As illustrated in a part (a) of FIG. 8, a bottom plate at the bottom of a fabrication chamber 44 can be moved up and down by a build piston 45, and the height of the bottom plate is adjusted so as to store powder corresponding to one layer. Accordingly, powder is spread up to the height of the top of the fabrication chamber 44 to form one powder layer (one lamination pitch). That is, before the powder is spread, the height of the surface of the powder is lower than the top of the fabrication chamber 44 by the one lamination pitch. The hopper supplier 40 opens the supply port 40a, and the vibrator 48 applies vibration to drop the powder stored in the hopper supplier 40. As the hopper supplier 40 moves in the X direction indicated by the arrow in the part (a) of FIG. 8, the powder to be formed as the next powder layer is packed over the entire powder surface of the powder that has already been layered.

When the powder is simply dropped from the hopper supplier 40, the powder has uneven surface and is not uniformly spread. Therefore, as illustrated in a part (b) of FIG. 8, the roller 41 moves while rotating, thereby flattening the surface of the powder and uniformly spreading the powder. The surplus powder falls into a powder collection groove 46 disposed around the fabrication chamber 44 to collect the powder.

After the powder is uniformly spread to form a powder layer, as illustrated in a part (c) of FIG. 8, the print head 42 discharges the fabrication liquid to apply the fabrication liquid to a predetermined region of the powder surface. The region to which the fabrication liquid is applied is determined based on the shape data received from the information processing apparatus 11. The fabrication layer is formed by the application of the fabrication liquid, and a green body 47 as a fabricated object in which the fabrication layers are laminated is formed as illustrated in a part (d) of FIG. 8. In the example illustrated in the part (d) of FIG. 8, the green body 47 is a cup with a handle. Thereafter, as illustrated in a part (e) of FIG. 8, the infrared lamp 43 applies heat to the powder surface to dry the applied fabrication liquid or accelerate a chemical reaction.

In the hopper-type fabrication apparatus 10, even when the roller 41 levels the powder, the powder may not be uniformly packed if the moving speed of the roller 41 is high. In the present embodiment, the control circuit 29 changes the operation of the hopper supplier 40 based on the surface information acquired by the powder surface sensor 28 to uniformly layer the powder. Specifically, the control circuit 29 changes the supply amount of the powder to be dropped. Alternatively, the control circuit 29 as the circuitry changes at least one of the vibration frequency and the vibration time of the vibration applied by the vibrator 48 to reduce the location-dependent deviation of the amount of powder.

The control of the operation of forming a powder layer has been described above. The fabricated object is fabricated by applying the fabrication liquid to bond the particles of the powder to each other. The particles of the powder are bonded by drying or a chemical reaction of adhesion. For this reason, in addition to the formation of the powder layer, the application of the fabrication liquid and the heating of the fabricated object may affect the quality of sintering. Therefore, the control circuit 29 as the circuitry may control the heating time or the heating temperature by the heating device in response to the surface information.

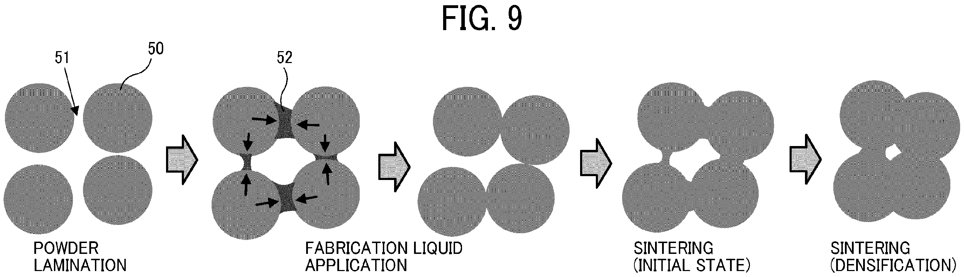

FIG. 9 is a schematic diagram of powder particles 50, illustrating a cause that affects the quality of sintering by controlling the operation of applying a fabrication liquid 52. In the powder layer, gaps 51 are formed between the powder particles 50 when viewed microscopically in terms of particle size even if the powder particles 50 are densely spread. Accordingly, when the fabrication liquid 52 is applied to the powder layer, the fabrication liquid 52 permeates into the gaps 51. The fabrication liquid 52 that has penetrated into the gaps 51 is interposed between the powder particles 50 and bonds the powder particles 50 to each other. At this time, the powder particles 50 are attracted to each other by the capillary force of the fabrication liquid 52, thereby increasing the density of the powder layer. Thereafter, when the powder particles 50 are heated, sintering proceeds from a portion where the powder particles 50 are in close contact with each other, densification of the powder particles 50 proceeds, and the powder particles 50 are integrated to form a fabricated object.

In general, when the density of the green body 47 before sintering is low, the fabricated object after sintering may have many defects or the sintering may not proceed. In order to obtain a high-quality sintered body, it is desirable to increase the density of the green body 47 as much as possible.

The density of the green body 47 can be increased by the capillary force of the fabrication liquid 52. However, when the amount of the fabrication liquid 52 is large, the capillary force may not act and the density may not be increased. On the other hand, when the amount of the fabrication liquid 52 is small, the bonding force between the particles is weak, thereby decreasing the strength of the green body 47. As a result, the green body 47 may be broken. Therefore, the amount of the fabrication liquid 52 is appropriately controlled to increase the density of the green body 47. In the present embodiment, the circuitry changes at least one of the amount of the fabrication liquid and the region to which the fabrication liquid is applied as the change of the operation of the application device based on the surface information.

The powder surface sensor 28 acquires surface information, and the control circuit 29 analyzes the surface information to determine which portion is dense and which portion is sparse in the powder layer. The density of the green body 47 can be increased by changing the amount of the fabrication liquid 52 depending on the location, for example, reducing the amount of the fabrication liquid 52 in the dense portion and increasing the amount of the fabrication liquid 52 in the sparse portion. In the present embodiment, the control circuit 29 adjusts (changes) the amount of the fabrication liquid 52 and the region to which the fabrication liquid 52 is applied based on the surface information to increase the density of the green body 47.

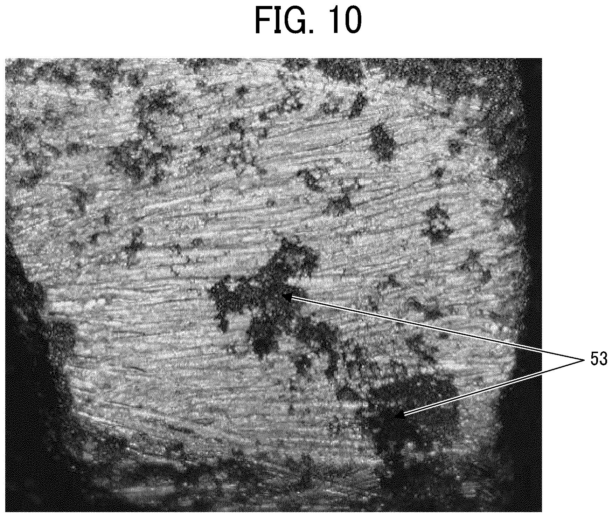

FIG. 10 is an illustration of an example of the sintered body in which sintering did not sufficiently proceed. In FIG. 10, the sintering proceeded only partially due to variation in the density of the green body 47. In a black portion 53 illustrated in FIG. 10, the sintering does not proceed, and the powder remains in the sintered body.

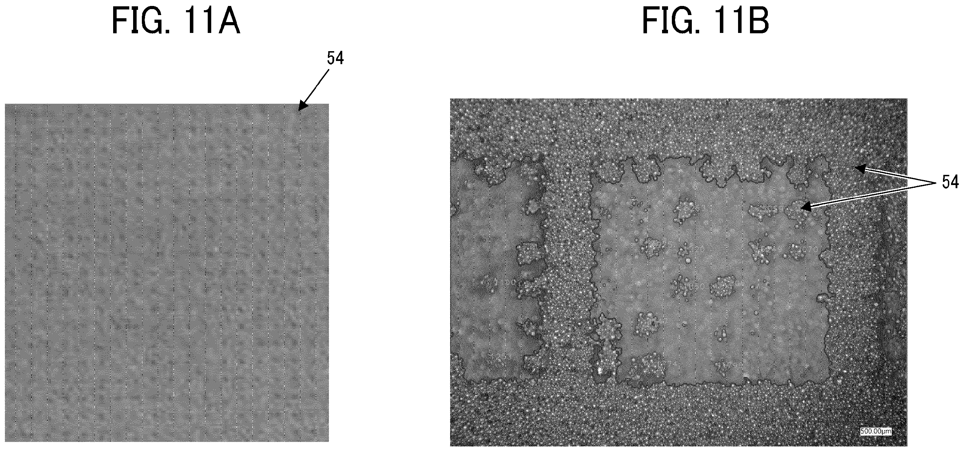

The circuitry may control the operation of the application device based on at least one of a height difference of the surface and a permeation range of the fabrication liquid as the surface information. As an example of the permeation range, FIGS. 11A and 11B are illustrations of the powder surface for explaining a method of detecting the permeation range of the fabrication liquid from the surface information. FIG. 11A illustrates an image of the powder surface captured by the camera when the fabrication liquid is applied to the powder surface at intervals of one dot. FIG. 11B illustrates an image of the powder surface captured by the camera when the fabrication liquid is applied to the powder surface and powder to which the fabrication liquid is not applied is removed from the powder surface.

From the image illustrated in FIG. 11A, a range 54 into which the fabrication liquid has permeated can be detected based on the shading in color. From the image illustrated in FIG. 11B, the range 54 into which the fabrication liquid has permeated can be detect based on whether the image is in focus or out of focus. In the image illustrated in FIG. 11A, dark dot portions at substantially equal intervals indicate the range 54 into which the fabrication liquid has permeated, and in the image illustrated in FIG. 11B, portions in focus indicate the range 54 into which the fabrication liquid has permeated.

When the fabrication liquid is applied, the droplets of the fabrication liquid that have landed on the powder surface spread and permeate as time elapses. In order to perform stable fabrication, the permeation range, in which how wide the fabrication liquid permeates when applied, is acquired to apply an appropriate amount of fabrication liquid. However, since the degree of permeation is affected by a variation in the composition of the powder and a variation in the property of the fabrication liquid, the permeation range may become wider or narrower than expected.

The powder surface sensor 28 captures an image of the powder surface into which the fabrication liquid permeates to acquire a permeation range of the fabrication liquid as surface information. The control circuit 29 appropriately adjusts the application amount of the fabrication liquid based on the acquired permeation range. When the permeation range of the fabrication liquid is wide, the application amount of the fabrication liquid may be adjusted so as to apply the fabrication liquid into a range having a shape slightly smaller than the target shape. In addition, in consideration of the influence of permeation, the application amount of the fabrication liquid may be changed depending on a location to be applied, for example, the application amount of the fabrication liquid is reduced in a portion where the fabrication liquid is likely to permeate, and the application amount of the fabrication liquid is increased in a portion where the fabrication liquid is less likely to permeate.

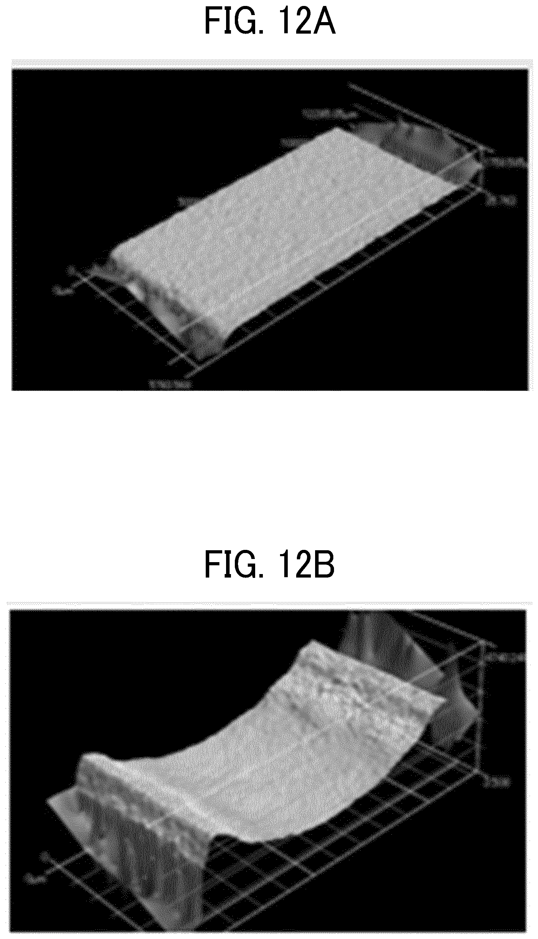

As an example of the height difference, FIGS. 12A and 12B are illustrations for explaining a method of detecting the height difference of the powder surface. FIG. 12A is the illustration of a result of the height difference of the powder surface, to which the fabrication liquid is not applied, measured by a three-dimensional measuring device. FIG. 12B is the illustration of a result of the height difference of the powder surface, to which the fabrication liquid has been applied, measured by the three-dimensional measuring device. As illustrated in FIGS. 12A and 12B, during fabrication, the fabricated object may warp due to the time difference in contraction. Here, the height difference of the powder surface is measured by the three-dimensional measuring device, but the height difference of the powder surface can be acquired from an image captured by the camera as the powder surface sensor 28.

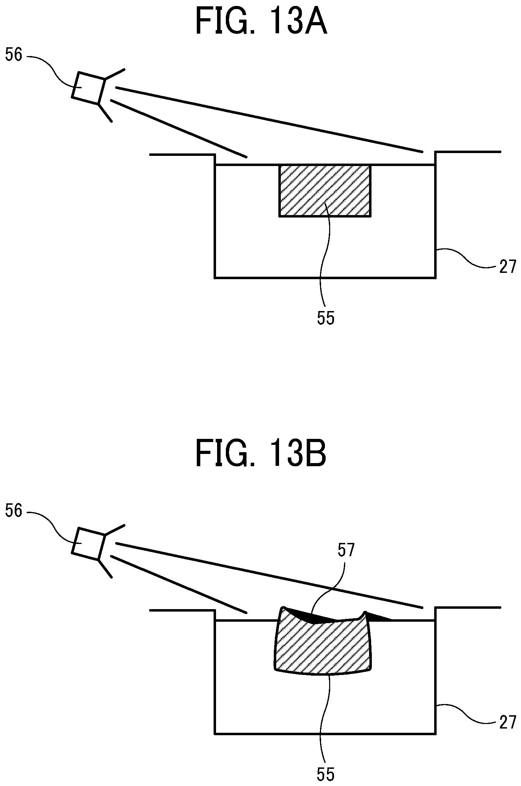

The acquisition of the height difference by the camera is described with reference to FIGS. 13A and 13B. FIG. 13A illustrates a fabricated object without warpage, and FIG. 13B illustrates a fabricated object with warpage. In the fabrication chamber 27, the fabrication liquid has been applied to a region 55 in the powder. A light source 56 illuminates the powder surface.

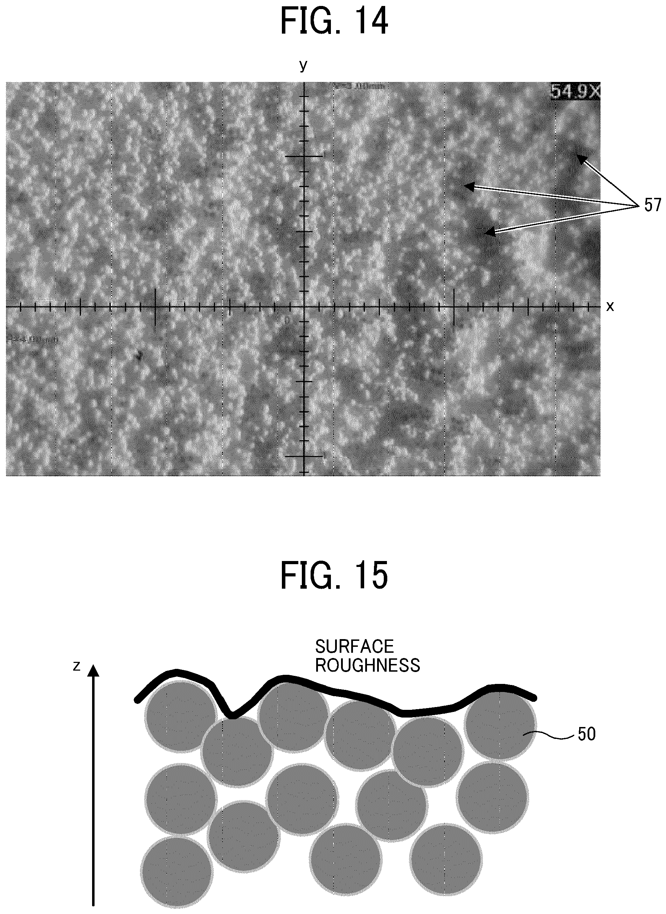

There is no shadow in the image captured by the camera serving as the powder surface sensor 28 when the fabricated object has no warpage as illustrated in FIG. 13A. On the other hand, there is a shadow 57 in the image when the fabricated object has warpage and the powder surface has the height difference as illustrated in FIG. 13B. The height difference and the size of the shadow are proportional to each other and the control circuit 29 controls (knows) the shape of the fabricated object to be formed. Accordingly, the magnitude of the warpage can be estimated based on the size of the shadow 57. FIG. 14 illustrates an example of an image of the powder surface in which the shadows 57 due to the warpage as illustrated in FIG. 13B are captured.

Since the magnitude of the warpage can be estimated from the size of the shadow 57 as described above, the control circuit 29 can adjust the heating temperature and the heating time by the infrared lamp and a waiting time to form a next layer over the layer after a completion of heating. That is, the control circuit 29 controls the forming device to wait for the waiting time before forming a next layer over the layer after a completion of heating by the heating device. The fabricated object contracts over time due to the application of the fabrication liquid. As a result, the fabricated object warps depending on the degree of contraction during fabrication. If deformation of the fabricated object proceeds sufficiently while each layer is fabricated, the deformation does not proceed anymore and warpage does not occur. If the deformation does not proceed sufficiently while each layer is fabricated, the contraction force is accumulated in the fabricated object each time a subsequent layer is fabricated. As a result, the fabricated object does not withstand the accumulated contraction force despite the surrounding support at a certain point in time, and thus is largely deformed. Accordingly, the control circuit 29 estimates the magnitude of warpage based on the size of the shadow 57 for each layer to determine whether minute deformation is sufficiently completed each time one layer is fabricated. When the minute deformation is not sufficiently completed, the control circuit 29 increases the heating temperature or the heating time by the infrared lamp or the waiting time to complete the minute deformation, thereby preventing the fabricated object from largely warping.

A portion of the powder surface to which the fabrication liquid is not applied keeps a flat surface as illustrated in FIG. 12A. On the other hand, a portion of the powder surface to which the fabrication liquid is applied is lowered as illustrated in FIG. 12B. This is because the particles are attracted to each other and contracted due to the capillary force generated when the fabrication liquid permeates between the particles, and thus the portion of the powder surface is recessed and lowered. Accordingly, the powder surface sensor 28 detects the height difference of the powder surface to detect an increase of density of the powder to which the fabrication liquid permeates.

Permeation, drying, and solidification of the fabrication liquid take time. the waiting time after forming the powder layer and applying the fabrication liquid is effective for stabilization of fabrication. This is because the particles of the powder are sufficiently attracted to each other by the capillary force, thereby increasing the density. However, the waiting time increases the time to form one layer. Accordingly, the waiting time is provided if desired and is set to an appropriate time. The control circuit 29 as the circuitry changes the waiting time based on the acquired surface information.

The powder surface sensor 28 acquires the growth of the recess as a height difference which is included in the surface information. The control circuit 29 determines to provide the waiting time and adjusts the length of the waiting time based on the height difference acquired by the powder surface sensor 28.

The growth of the recess can be monitored by observing the height difference, which indicates a phenomenon in which the particles are attracted to each other and contracted by the capillary force when the fabrication liquid permeates between the particles. For this reason, the fabrication liquid is applied several times in advance, and the height difference of the powder surface is observed to grasp the degree of progress of the contraction of the powder. The control circuit 29 adjusts the number of times of application in accordance with the grasped degree of progress of the contraction to optimize the amount of the fabrication liquid.

The control circuit 29 as the circuitry estimates the packing density from at least the unevenness and the shading of the powder surface as the surface information. As an example of the unevenness as the surface information, FIG. 15 is a schematic diagram of powder particles 50 for explaining a method of estimating the density from the height difference of the powder surface. The density of the powder layer depends on how densely packed the powder particles 50 are. The degree of particle packing depends on the roughness of the powder surface (i.e., surface roughness), and the density is low when the powder surface is rough. Thus, the powder surface sensor 28 acquires the roughness of the powder surface as the surface information in accordance with whether the powder surface has many irregularities and whether the height difference is large. The control circuit 29 estimates the density from the roughness of the powder surface acquired by the powder surface sensor 28.

The density corresponding to the roughness is measured in advance in accordance with the composition or the like of the powder and accumulated as data. Thus, the density can be estimated using the accumulated data based on the detected roughness of the powder surface. This method is only one of examples, and the present disclosure is not limited the above example.

The density of the powder layer can be estimated not only from the roughness of the powder surface but also from the shading of the powder surface. As an example of the shading as the surface information, a method of estimating the density from the shadow of the particles of the powder on the powder surface is described with reference to FIGS. 13B and 14. As illustrated in FIG. 13B, when light illuminates the powder surface at a low angle close to parallel to the powder surface (i.e., a shallow angle), a dark color portion, which is the shadow 57, is conspicuous. After the shadow 57 is emphasized by the light, the shadow 57 is captured by the camera serving as the powder surface sensor 28, and the distribution (texture) of the shadows 57 as illustrated in FIG. 14 is acquired. The control circuit 29 estimates the density based on the acquired distribution of the shadows 57.

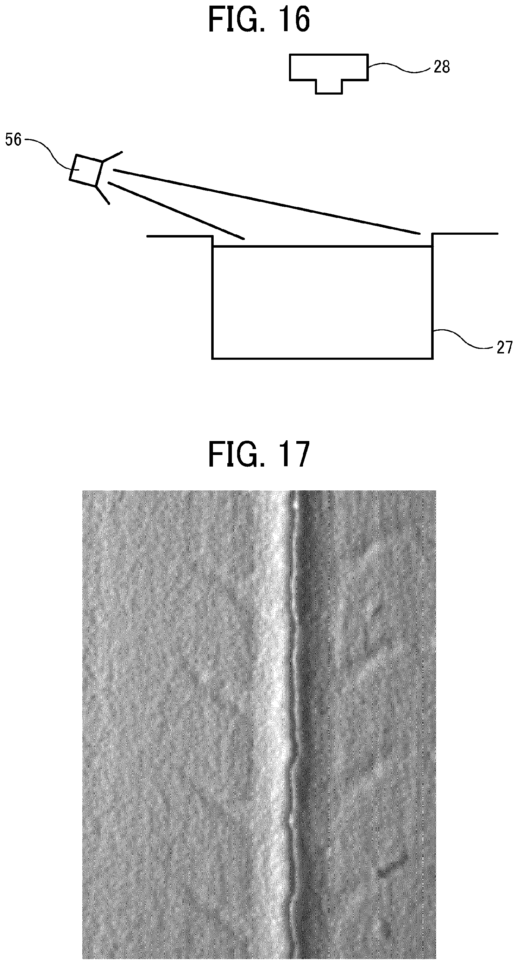

FIG. 16 illustrates an embodiment for facilitating the detection of abnormality of the powder surface by the powder surface sensor 28. While the light source 56 irradiates the fabrication chamber 27 with light at the shallow angle, the powder surface sensor 28 captures an image of the powder surface to easily detect the abnormality of the powder surface. An example of the captured image is illustrated in FIG. 17. When the powder surface is substantially flat, the captured image has a uniform luminance. If there is a crack or an aggregate on the powder surface, a shadow thereof appears on the powder surface. Thus, the crack or the aggregate can be easily detected.

When the density of the powder layer is low, the particles of the powder are sparse, there are many gaps between the particles, and the powder surface has many irregularities. Accordingly, when the light illuminates the powder surface at the shallow angle, the shadow 57 clearly appears on the powder surface. On the other hand, when the density of the powder layer is high, the particles of the powder are densely packed, and the powder surface has few irregularities. Accordingly, when the light illuminates the powder surface at the shallow angle, small shadows 57 dispersedly appear on the powder surface.

As described above, the density can be estimated based on the difference in appearance of the shadows 57. Also in this method, the density corresponding to the distribution of the shadow is measured in advance and accumulated as data. Thus, the density can be estimated using the accumulated data based on the detected distribution of the shadow.

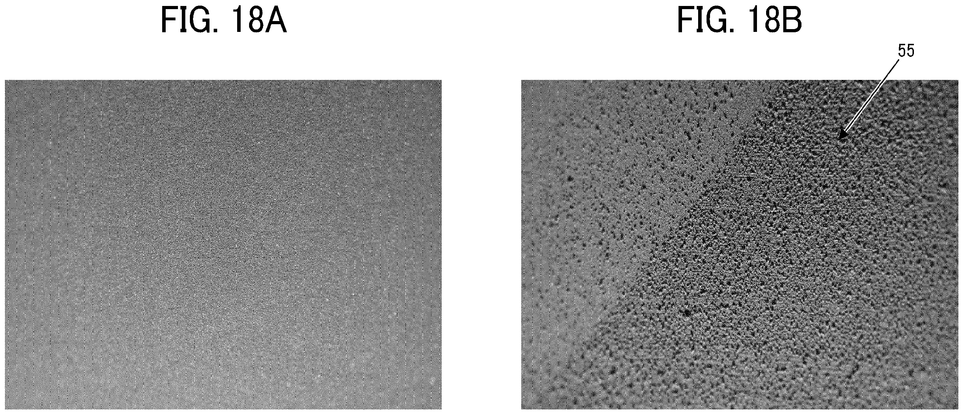

FIGS. 18A and 18B are illustrations of the surface information after the powder layer is formed and the surface information after the fabrication liquid is applied. FIG. 18A illustrates an image as the surface information captured by the camera as the powder surface sensor 28 after the powder layer is formed. FIG. 18B illustrates an image as the surface information captured by the camera as the powder surface sensor 28 after the fabrication liquid is applied. In FIG. 18B, the fabrication liquid has been applied to the dark region 55 on the right side.

The surface information is acquired by the camera serving as the powder surface sensor 28 at a timing after the powder layer is formed and before the fabrication liquid is applied (i.e., in response to a completion of a formation of the layer by the forming device), and at a timing after the powder layer is formed and the fabrication liquid is applied to a predetermined region in the formed powder layer (i.e., in response to a completion of an application of the fabrication liquid onto the layer by the application device). When the packing density of the powder is estimated from the irregularities or the shading of the powder surface as described with reference to FIGS. 14 and 15, the powder surface after the powder layer is formed is captured by the camera, and the captured image is acquired as the surface information. When the permeation range of the fabrication liquid or the change in the irregularities of the powder surface due to the application of the fabrication liquid is detected as described with reference to FIGS. 11A to 12B, the powder surface after the fabrication liquid is applied is captured by the camera, and the captured image is acquired as the surface information.

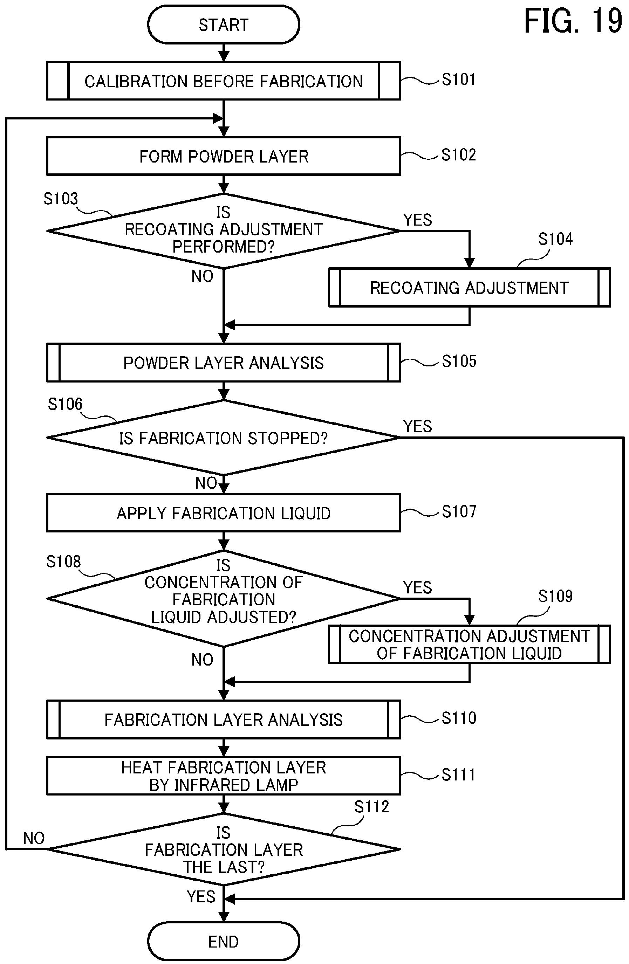

With reference to FIG. 19, a method of controlling the fabrication of a three-dimensional object is described. The control circuit 29 starts controlling the fabrication when the shape data is transmitted to the fabrication apparatus 10 and the control circuit 29 receives an instruction to fabricate a three-dimensional object. In step S101, the control circuit 29 calibrates parameters related to the fabrication before the fabrication. In step S102, the control circuit 29 instructs the powder head 23, the leveling roller 24, the powder feed piston 25, and the build piston 26 as the forming device to form a powder layer, and the powder head 23 and so on form one layer of the powder layer in response to the instruction. At this time, the leveling roller 24 is operated at a set rotation speed and moving speed.

In step S103, the control circuit 29 determines whether to perform recoating adjustment (e.g., adjustment of the rotation speed and the moving speed of the leveling roller 24). For example, the recoating adjustment is performed for every several tens of layers. Accordingly, after the designated number of layers are formed, the process proceeds to step S104 to perform the recoating adjustment.

In step S105, the powder surface sensor 28 as the acquisition device acquires surface information of the formed powder layer. The control circuit 29 performs powder layer analysis based on the acquired surface information. As a result, for example, the control circuit 29 increases the supply amount of powder when the control circuit 29 determines that the supply amount of powder is insufficient, or the control circuit 29 stores data of the occurrence of abnormality as a history when the control circuit 29 detects another abnormality.

In step S106, for example, when the control circuit 29 determines that the abnormality occurs beyond an allowable range based on a result of step S105, the control circuit 29 determines to stop the fabrication. The control circuit 29 determines whether to stop the fabrication based on, for example, the number of occurrences of abnormality or the size of an abnormal portion.

In step S107, the control circuit 29 instructs the inkjet print head 22 as the application device to apply the fabrication liquid based on data indicating the corresponding fabrication layer in the shape data, and the inkjet print head 22 applies the fabrication liquid to a desired region of the powder surface of the formed powder layer. When a second fabrication layer is formed, the data indicating the second fabrication layer is used as the data indicating the corresponding fabrication layer. As an example, the method in which the forming device and the application device are operated in this order has been described. Alternatively, the application device and the forming device may be operated in this order, or a predetermined process may be performed between the operation of the forming device and the operation of the application device.

In step S108, the control circuit 29 determines whether to adjust the concentration of the fabrication liquid. For example, the concentration of the fabrication liquid may be adjusted for every several tens of layers. Thus, after the designated number of layers are formed, the process proceeds to step S109 to adjust the concentration of the fabrication liquid.

In step S110, the control circuit performs fabrication layer analysis. The powder surface sensor 28 acquires surface information of the powder surface to which the fabrication liquid is applied, and the control circuit 29 adjusts the heating temperature of the infrared lamp and a wait time for heating based on the acquired surface information.

In step S111, the infrared lamp as the heating device heats the fabrication layer. The control circuit 29 changes the set values of the heating time and the heating temperature by the infrared lamp based on the acquired surface information, thereby densifying the fabrication layer and improving the quality of the fabricated object. Thus, the control circuit 29 can also control the operation of the infrared lamp.

In step S112, the control circuit 29 refers to the shape data and determines whether the last fabrication layer has been formed. If there is a fabrication layer to be formed, the process returns to step S102 to form the next fabrication layer. On the other hand, when the last fabrication layer has been formed, the process ends to complete the control.

In step S106, when there is unevenness or a crack in the powder layer, the control circuit 29 determines to stop the operation of forming the powder layer. Thus, the operation of forming the powder layer is stopped, and the process ends to complete the control.

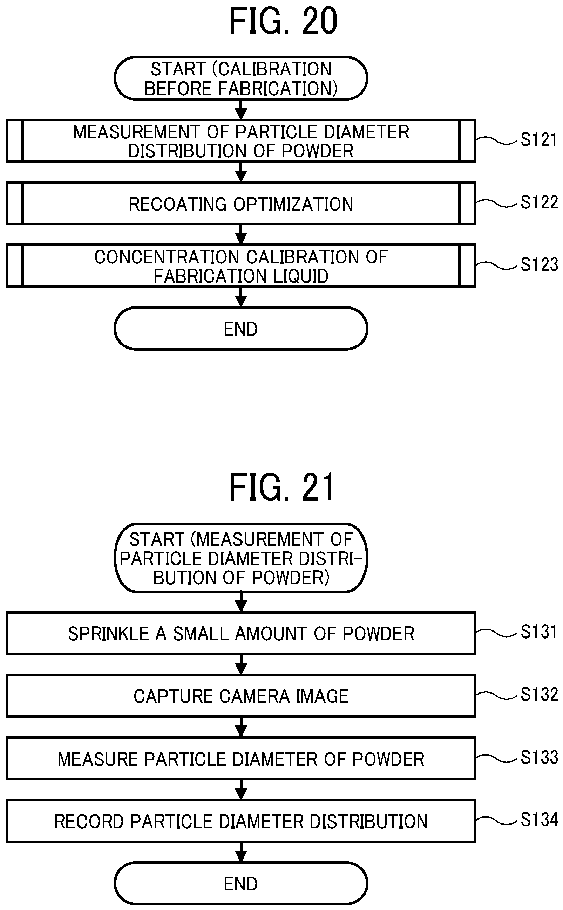

Calibration before fabrication is described below with reference to FIG. 20. After calibration before fabrication is started, the control circuit 29 performs measurement of the particle diameter distribution of the powder in step S121, recoating optimization in step S122, and concentration calibration of the fabrication liquid in step S123, and then the process ends.

An example of the measurement of the particle diameter distribution of the powder is described with reference to FIG. 21. In step S131, the fabrication apparatus 10 sprinkles a small amount of powder in a predetermined area. In step S132, the powder surface sensor 28 captures an image of the sprinkled powder. In step S133, the control circuit 29 calculates the diameter of each particle of the powder captured in the image. In step S134, the control circuit 29 determines a distribution of diameters of a plurality of particles in the image. A plurality of images may be captured, or only one image may be used. The distribution of the particles of the powder is one of the properties of the powder. The control circuit 29 records the distribution, and at the same time, the control circuit 29 also adjusts the mixing ratio of the recycled powder, adjusts the moving speed and the rotation speed of the leveling roller 24, and adjusts the concentration of the fabrication liquid based on the distribution.

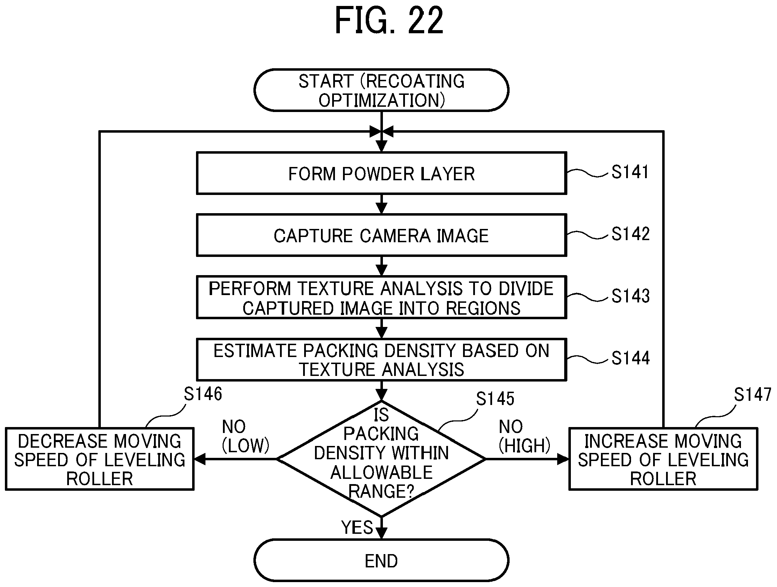

The procedure of recoating optimization is described with reference to FIG. 22. In step S141, the control circuit 29 instructs the powder head 23, the leveling roller 24, the powder feed piston 25, and the build piston 26 as the forming device to form a powder layer, and the powder head 23 and so on form a plurality of the powder layers in response to the instruction. In step S142, the powder surface sensor 28 captures an image of the powder surface.

In step S143, the control circuit 29 performs texture analysis. In the texture analysis, for example, a co-occurrence matrix is calculated. In the co-occurrence matrix, the probability of the luminance of the adjacent pixel for each distance and each angle is calculated at each pixel in the captured image. The co-occurrence matrix indicates different values for different textures. Examples of the texture analysis includes an analysis using high-order autocorrelation, an analysis using Fourier analysis, an analysis using fractal structure. Based on the plurality of analysis results, the control circuit 29 estimates the packing density of the powder in step S144. That is, for powder surfaces having different packing densities, correspondence between the captured images of the powder surfaces and various texture analysis results is checked in advance, and the control circuit 29 estimates the packing density of the powder based on the correspondence.

In step S145, the control circuit 29 checks whether the estimated value of the packing density of the powder is within an allowable range (i.e., a predetermined range within which a fabricated object has sufficient strength after the fabrication liquid is applied to the powder). If the packing density of the powder is within the allowable range, the process ends. If the packing density of the powder is lower than the allowable range, the control circuit 29 decreases the moving speed of the leveling roller 24 or decreases the rotation speed of the leveling roller 24 to increase the packing density in step S146. Thereafter, the process returns to step S141 to form a powder layer again. On the other hand, if the estimated value of the packing density of the powder is higher than the allowable range, the control circuit 29 increases the moving speed of the leveling roller 24 or increases the rotation speed of the leveling roller 24 to decrease the packing density in step S147. Typically, the higher packing density of the powder is preferable. However, if the packing density does not fall below the allowable range, the control circuit 29 may increase the moving speed of the leveling roller 24 to shorten the fabrication time, thereby enhancing the productivity of the powder layer. Thereafter, the process returns to step S141 to form a powder layer again.

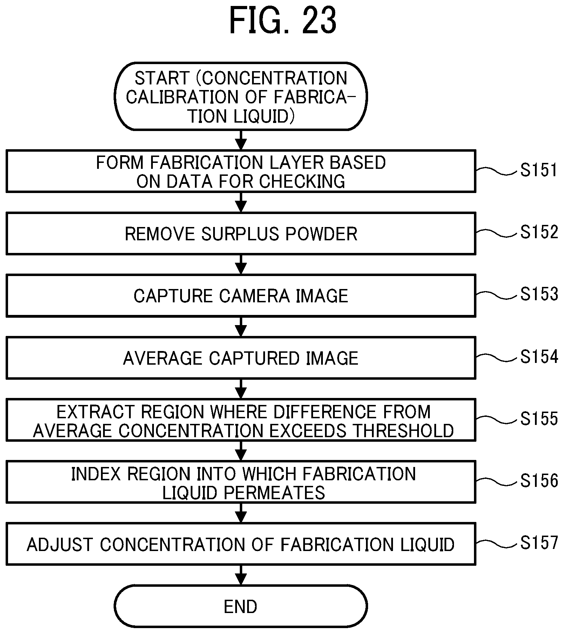

The procedure of the calibration before fabrication is described below with reference to FIG. 23. First, in step S151, the control circuit 29 performs fabrication using shape data for checking in a normal sequence, similarly to steps 102 to 113 in FIG. 19. Thereafter, surplus powder is removed in step S152. For example, the fabrication apparatus 10 blows compressed air onto the powder surface to blow off the surplus powder in the region where the fabrication liquid is not applied. In step S153, the powder surface sensor 28 captures an image of the powder surface. At this time, the powder surface sensor 28 captures the image focusing on the region to which the fabrication liquid is applied. In steps 154 to 155, the control circuit 29 extracts the region to which the fabrication liquid is applied. In the image captured in step S153, the region to which the fabrication liquid is applied is in focus, and the region to which the fabrication liquid is not applied and from which the powder is blown off in step S152 is out of focus (see FIG. 11).

Specifically, in step S154, the control circuit 29 averages the images to calculate an average value of luminance of the surrounding pixels. In step S155, the control circuit 29 calculates a difference between the luminance of each pixel and the average value of luminance of the surrounding pixels. The permeation range of the fabrication liquid can be acquired based on the difference. In step S156, the control circuit 29 compares the result of the above calculation with the shape data for checking to acquire the permeation range of the fabrication liquid, and indexes the permeation range of the fabrication liquid. In step S157, the control circuit 29 adjusts the concentration of the fabrication liquid to be applied based on the permeation range of the fabrication liquid.

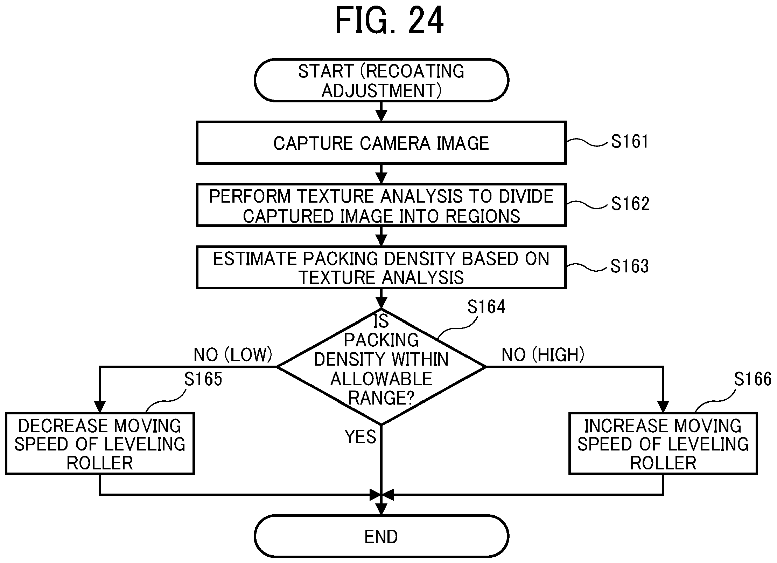

The procedure of the recoating adjustment in step S104 illustrated in FIG. 19 is described with reference to FIG. 24. In step S161, the powder surface sensor 28 captures an image of the powder surface of the powder layer. In step S162, the control circuit 29 performs a plurality of texture analyses to acquire the feature amount of the texture of the powder surface. In this step, the control circuit 29 uses the same method as that in step S143 illustrated in FIG. 22. In step S163, the control circuit 29 estimates the packing density of the powder from the feature amount of the texture. In this step, the control circuit 29 uses the same method as that in step S144 illustrated in FIG. 22. In step S164, if the estimated value of the packing density is within the allowable range, the process ends. If the estimated value of the packing density is lower than the allowable range, the process proceeds to step S165, and the control circuit 29 decreases the moving speed of the leveling roller 24 for the next and subsequent layers. On the other hand, if the estimated value of the packing density is higher than the allowable range, the process proceeds to step S166, and the control circuit 29 increases the moving speed of the leveling roller 24 for the next and subsequent layers.
Then, the process ends.

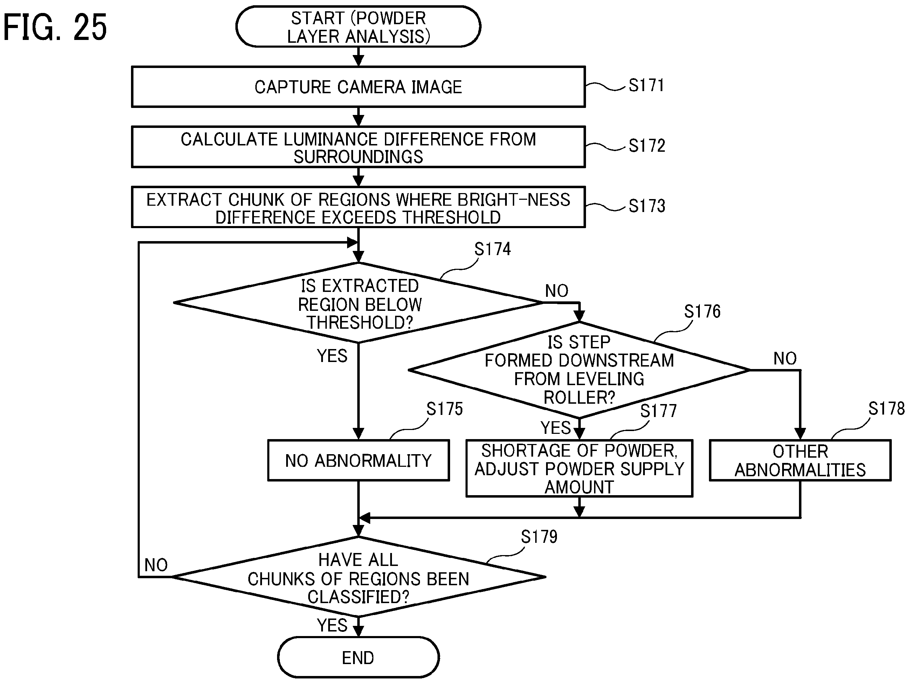

The procedure of the powder layer analysis in step S105 illustrated in FIG. 19 is described with reference to FIG. 25. In step S171, the powder surface sensor 28 captures an image of the powder surface of the powder layer. The same image captured in step S161 may be used. In step S172, the control circuit 29 calculates a difference of luminance between a pixel of interest and the surrounding pixels for all the pixels in the image. In step S173, the control circuit 29 extracts regions in which the difference of luminance is equal to or greater than a threshold and divided into chunks of regions which are continuous. In steps 174 to 178, the control circuit 29 classifies each of the divided chunks. In step S174, the control circuit 29 calculates an area of the chunk. If the area is equal to or less than a threshold, the control circuit 29 classifies the extracted chunk as a noise or a small acceptable abnormality in step S175. If the area is equal to or larger than the threshold, the control circuit 29 determines whether the extracted chunk indicates a step disposed downstream from the leveling roller 24 in the moving direction in step S176. If the extracted chunk indicates the step, the process proceeds to step S177, and the control circuit 29 classified the extracted chunk as an abnormality caused by the shortage of the supply amount of the powder. Otherwise, the process proceeds to step S178, and the control circuit 29 classifies the extracted chunk as other abnormalities. In step S179, the control circuit 29 determines whether all the chunks have been classified. If the chunks to be classified remain, the process returns to step S174, and if the chunks do not remain, the process of the powder analysis ends.

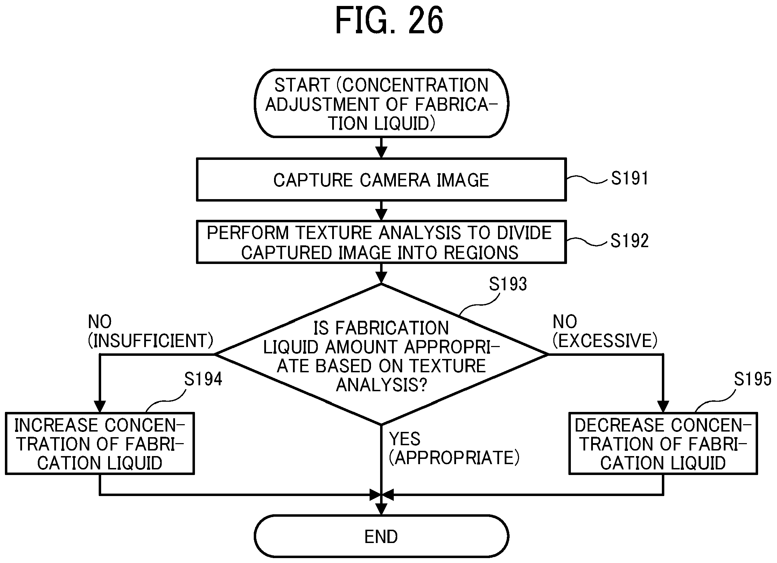

The procedure of the concentration adjustment of the fabrication liquid in step S109 illustrated in FIG. 19 is described with reference to FIG. 26. In step S191, the powder surface sensor 28 captures an image of the powder surface of the fabrication layer. In step S192, the control circuit 29 performs texture analysis. The texture analysis is performed on a region to which the fabrication liquid is applied in the image captured in step S191. The content of the texture analysis may be the same as or different from that in steps 143 and 162. In step S193, the control circuit 29 determines whether the amount of the applied fabrication liquid is sufficient or insufficient based on the result of the texture analysis. Results of texture analyses of images of powder surfaces to which the fabrication liquid is applied with various amounts are stored in advance, and the control circuit 29 compares the result of the performed texture analysis with the stored results to estimate the amount of the fabrication liquid. When the estimated value of the amount of the fabrication liquid is appropriate, the process ends without doing anything. In a case where the estimated value of the amount of the fabrication liquid is insufficient, the process proceeds to step S194, and the control circuit 29 increases the concentration of the fabrication liquid for the next and subsequent layers. In a case where the estimated value of the amount of the fabrication liquid is excessive, the process proceeds to step S195, and the control circuit 29 decreases the concentration of the fabrication liquid for the next and subsequent layers. Then, the process ends in either case.

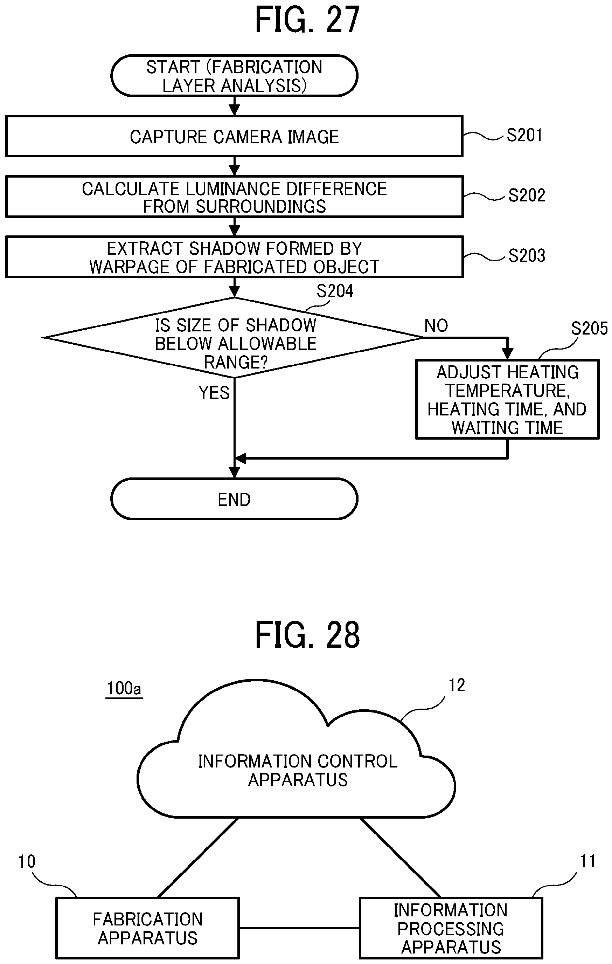

The procedure of the fabrication layer analysis in step S110 illustrated in FIG. 19 is described with reference to FIG. 27. In step S201, the powder surface sensor 28 captures an image of the powder surface of the fabrication layer. The same image captured in step S191 may be used. In step 202, the control circuit 29 calculates the difference between the luminance of each pixel and the average value of the luminance of the surrounding pixels. In step 203, the control circuit 29 extracts, as the shadow, a region in which the difference of luminance is equal to or greater than the threshold and which is located at the boundary between the region to which the fabrication liquid is applied and the region to which the fabrication liquid is not applied.

In step 204, the control circuit 29 determines whether the size of the shadow is within an allowable range. The relation between the magnitude of the warpage and the size of the shadow is acquired in advance based on the shape data. Accordingly, the control circuit 29 can determine whether the magnitude of the warpage is within the allowable range based on the size of the shadow, which is within or out of the allowable range. If the magnitude of the warpage is not within the allowable range, the process proceeds to step 205, and the control circuit 29 adjusts the heating conditions in step S111, for example, increases the heating temperature, the heating time, or the waiting time.

FIG. 28 is a block diagram of a fabrication system according to another embodiment of the present disclosure. A fabrication system 100a illustrated in FIG. 28 is different from the fabrication system 100 described in the above embodiment illustrated in FIG. 1 and includes the fabrication apparatus 10 and the information processing apparatus 11, and an information control apparatus 12 in a cloud has at least a part or all of functions of the information processing apparatus 11. The fabrication apparatus 10, the information processing apparatus 11, and the information control apparatus 12 are communicably connected to each other via a cable or a network. The network may be a wireless network or a wired network. The information control apparatus 12 may include a part of functions of the fabrication apparatus 10 in addition to the functions of the information processing apparatus 11.

As described above, the fabrication apparatus acquires the surface information each time one layer is formed and controls the operation of forming the powder layer, the operation of applying the fabrication liquid, and the like based on the acquired surface information, thereby reducing variations in the shape and strength of the fabricated three-dimensional object and improving the quality of the three-dimensional object.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A fabrication apparatus (10) comprising:
a forming device (23; 24; 25; 26) configured to form a layer containing powder (20);
an application device (22) configured to apply a fabrication liquid (21) to the layer formed by the forming device (23; 24; 25; 26);
an acquisition device (28) configured to acquire surface information of a surface of the layer; and
circuitry (29) configured to control at least one of the forming device (23; 24; 25; 26) and the application device (22) to change at least one of an operation of the forming device (23; 24; 25; 26) and an operation of the application device (22) based on the surface information acquired by the acquisition device (28).

2. The fabrication apparatus (10) according to claim 1,
wherein the acquisition device (28) acquires the surface information in response to a completion of a formation of the layer by the forming device, and
the circuitry (29) controls the forming device (23; 24; 25; 26) to change the operation of the forming device (23; 24; 25; 26) on forming of a next layer over the layer based on the surface information acquired by the acquisition device (28).

3. The fabrication apparatus (10) according to claim 2, further comprising a fabrication chamber (27) in which the layer is formed by the forming device (23; 24; 25; 26),
wherein the circuitry (29) controls the forming device (23; 24; 25; 26) to change an amount of the powder (20) supplied to the fabrication chamber (27).

4. The fabrication apparatus (10) according to claim 2 or 3,
wherein the forming device (23; 24; 25; 26) includes a roller (24) configured to rotate and move to flatten a surface of the powder (20) to form the layer, and
the circuitry (29) controls the roller (24) to change at least one of a rotation speed and a moving speed of the roller (24).

5. The fabrication apparatus (10) according to claim 2 or 3, further comprising a fabrication chamber (44) in which the layer is formed by the forming device (40; 41; 48),
wherein the forming device (40; 41; 48) includes:
a container (40) containing the powder (20) to be supplied to the fabrication chamber (44); and
a vibrator (48) configured to apply vibration to the container (40), and
the circuitry (29) controls the vibrator (48) to change at least one of a vibration frequency and a vibration time of the vibrator (48).

6. The fabrication apparatus (10) according to any one of claims 1 to 5,
wherein the acquisition device (28) acquires the surface information in response to a completion of an application of the fabrication liquid (21) onto the layer by the application device (22), and
the circuitry (29) controls the application device (22) to change the operation of the application device (22) based on the surface information of the layer onto which the fabrication liquid (21) has been applied.

7. The fabrication apparatus (10) according to claim 6,
wherein the circuitry (29) controls the application device (22) to change at least one of an amount of the fabrication liquid (21) to be applied to the layer and a region (55) in the layer onto which the fabrication liquid (21) is to be applied.

8. The fabrication apparatus (10) according to any one of claims 1 to 7,
wherein the circuitry (29) controls at least one of the forming device (23; 24; 25; 26) and the application device (22) to change at least one of the operation of the forming device (23; 24; 25; 26) and the operation of the application device (22) based on a packing density of the powder (20) acquired from the surface information.

9. The fabrication apparatus (10) according to claim 8,
wherein the circuitry (29) estimates the packing density from a shadow (57) of particles of the powder (20) on a surface of the layer, the shadow (57) being included in the surface information.

10. The fabrication apparatus (10) according to claim 6 or 7,
wherein the circuitry (29) controls the application device (22) to change the operation of the application device (22) based on at least one of a height difference of a surface of the layer and a permeation range (54) of the fabrication liquid (21), the height difference and the permeation range (54) being included in the surface information.

11. The fabrication apparatus (10) according to any one of claims 1 to 10, further comprising a heating device (43) configured to heat the layer onto which the fabrication liquid (21) has been applied,
wherein the circuitry (29) controls the heating device to change at least one of a heating time and a heating temperature of the heating device (43) based on the surface information acquired by the acquisition device (28).

12. The fabrication apparatus (10) according to claim 11,
wherein the circuitry (29) controls the forming device (23; 24; 25; 26) to wait for a waiting time before forming a next layer over the layer after a completion of heating by the heating device (43) and changes the waiting time based on the surface information acquired by the acquisition device (28).

13. The fabrication apparatus (10) according to claim 1,
wherein the circuitry (29) is further configured to:
store data including fabrication data of the three-dimensional object, the surface information, and an operation of the fabrication apparatus (10);
extract a feature amount of each of the fabrication data, of the three-dimensional object, the surface information, and the operation of the fabrication apparatus (10) from the data;
perform learning a relation between the feature amount;
estimate the surface of the layer and the operation of the fabrication apparatus (10) based on the relation learned by the learning; and
control at least one of the forming device (23; 24; 25; 26) and the application device (22) to change at least one of the operation of the forming device (23; 24; 25; 26) and the operation of the application device (22) based on the estimate.

14. A fabrication system (100) comprising:
a forming device (23; 24; 25; 26) configured to form a layer containing powder (20);
an application device (22) configured to apply a fabrication liquid (21) to the layer formed by the forming device (23; 24; 25; 26) to fabricate a three-dimensional object;
an acquisition device (28) configured to acquire surface information of a surface of the layer; and
circuitry (29) configured to control at least one of the forming device (23; 24; 25; 26) and the application device (22) to change at least one of an operation of the forming device (23; 24; 25; 26) and an operation of the application device (22) based on the surface information acquired by the acquisition device (28).

15. A fabrication method comprising:
forming (S102) a layer containing powder (20);
applying (S107) a fabrication liquid (21) onto the layer formed by the forming to fabricate a three-dimensional object;
acquiring (S105; S110) surface information of a surface of the layer; and
controlling (S146; S147; S157; S165; S166; S194;S195) at least one of the forming and the applying to change an operation of at least one of the forming and the applying based on the surface information acquired by the acquiring.
